# EUROPEAN PATENT APPLICATION

(11) **EP 4 668 436 A1**
(43) Date of publication of application: **24.12.2025**
(21) Application number: 24836342.6
(22) Date of filing: 03.07.2024
(51) Int. Cl.: H01M 50/24, H01M 50/502, H01M 50/503, H01M 50/516, H01M 50/507, H01M 50/211, H01M 50/249

(54) **BATTERY MODULE, AND BATTERY PACK AND VEHICLE INCLUDING SAME**

(30) Priority: 05.07.2023 KR 20230087075
(71) Applicant: LG Energy Solution, Ltd., Seoul 07335 (KR)
(72) Inventor: HAN, Min-Hee, Daejeon 34122 (KR); SHIN, Jin-Kyu, Daejeon 34122 (KR); CHOI, Wan-Sup, Daejeon 34122 (KR); HEO, Sam-Hoe, Daejeon 34122 (KR); JUNG, Hye-Mi, Daejeon 34122 (KR)
(74) Representative: Plasseraud IP
(86) International application number: PCT/KR2024/009423
(87) International publication number: WO 2025/009895

(57) **Abstract**

The present disclosure relates to a battery module including a plurality of battery cells, each battery cell having an electrode lead; a busbar frame having a lead slot located at a side where the electrode leads of the plurality of battery cells are disposed, the lead slot through which the electrode leads of the plurality of battery cells pass; and a frame cover located at an outer side of the busbar frame and configured to cover at least part of the lead slot.

## Description

### TECHNICAL FIELD

The present disclosure relates to a battery module and a battery pack and a vehicle including the same. More particularly, the present disclosure relates to a battery module capable of effectively delaying thermal runaway.

The present application claims priority to Korean Patent Application No. 10-2023-0087075 filed on July 5, 2023 in the Republic of Korea, the disclosure of which is incorporated herein by reference.

### BACKGROUND

Due to being easily applicable to different types of products and having electrical properties such as high energy density, secondary batteries are commonly applied to not only portable devices but also electric vehicles (EVs) or hybrid electric vehicles (HEVs) that are powered by a source of electric power. Secondary batteries remarkably reduce the use of fossil fuels, and in addition to the primary advantage, they do not generate by-products from the use of energy. From this perspective, secondary batteries are seen as a new source of energy that is more environmentally friendly and energy-efficient.

The types of secondary batteries being now widely used include lithium ion batteries, lithium polymer batteries, nickel cadmium batteries, nickel hydrogen batteries, nickel zinc batteries and so on. When higher output voltage is required, a plurality of battery cells may be connected in series to form a battery module or a battery pack. Additionally, the battery module or the battery pack may be formed by connecting the plurality of battery cells in parallel to increase the charge/discharge capacity. Accordingly, the number of battery cells included in the battery module or pack may be variously set depending on the required output voltage or charge/discharge capacity.

Meanwhile, because the battery cell involves chemical reaction during charging and discharging, when it is used in a higher environment than the optimal temperature, the performance may degrade, and when thermal control to the optimal temperature fails, fires or explosions may occur unexpectedly. Additionally, the battery module has a structure in which the battery cells are densely packed in a module housing. Accordingly, when a thermal event occurs in any one battery cell, high temperature gases and flames may spread to adjacent battery cells, causing a very dangerous situation, for example, explosion propagation.

In particular, when the battery module includes the plurality of battery cells, in the event of thermal runaway in the specific battery cell, there is a high likelihood that high temperature gases, flames or sparks may be ejected in the front-rear direction of the battery cells at which the electrode lead of the corresponding battery module is located and/or in the upward direction of the battery cell. As a result, thermal damage may occur to the components located at two ends of the battery module, for example, the components adjacent to an end plate or a busbar frame, causing structural collapse.

Additionally, flames ejected through the end plate may induce thermal propagation to the adjacent battery module. In particular, when flames produced from the specific battery module spread to the end plate of the other battery module, thermal propagation or fire spread between modules may be more likely to occur. As a consequence, thermal runaway may spread to the entire battery pack including battery modules.

Accordingly, there is a need for development of a structure for delaying thermal runaway by preventing or properly controlling the release of high temperature gases or flames from any battery cell in case of a thermal event in the battery cell.

### DISCLOSURE

### Technical Problem

The present disclosure is directed to providing a battery module with improved safety and reliability by effectively preventing thermal propagation between battery cells or battery modules by proper control of high temperature gases or flames produced from a battery cell in an abnormal situation in the battery cell.

However, the technical problems to be solved by the present disclosure are not limited to the above-described problems, and these and other problems will be clearly understood by those skilled in the art from the following description.

### Technical Solution

To solve the above-described problem, the present disclosure provides a battery module including a plurality of battery cells, each battery cell having an electrode lead; a busbar frame having a lead slot located at a side where the electrode leads of the plurality of battery cells are disposed, the lead slot through which the electrode leads of the plurality of battery cells pass; and a frame cover located at an outer side of the busbar frame and configured to cover at least part of the lead slot.

The frame cover may include an elastic material and come into close contact with the busbar frame.

The battery module according the present disclosure may further include a compression cover configured to compressedly secure the frame cover to the busbar frame.

The battery module according the present disclosure may further include a first busbar disposed between the compression cover and the busbar frame and electrically connected to the electrode lead.

The frame cover may include a lead exposure hole penetrated in at least one surface, and the first busbar may be inserted into the lead exposure hole and electrically connected the electrode lead through the lead exposure hole.

The first busbar may be configured to cover the lead exposure hole.

The first busbar may be configured to apply pressure to the electrode lead through the lead exposure hole.

At least part of the electrode lead may be compressed between the busbar frame and the first busbar through the lead slot.

The lead exposure hole may be configured to prevent the lead slot from being exposed to outside.

The compression cover may be bolt-fastened to the busbar frame.

The busbar frame may include a second busbar at an inner side of the electrode lead, and
the compression cover may be coupled to the first busbar and the second busbar.

The plurality of battery cells may be stacked and arranged in a direction, and the battery module according to the present disclosure may further include a plurality of barrier members between the at least one battery cell along the direction.

The busbar frame may have a through-hole through which at least part of the plurality of barrier members passes.

The barrier member may include a protruding portion that is inserted into the through-hole and protrudes from the busbar frame toward the frame cover, and the protruding portion may be configured to divide an outer space of the busbar frame into a plurality of segments.

The busbar frame may include a plurality of division surfaces divided by the through-hole, and the frame cover may include a plurality of cover plates individually corresponding to the plurality of division surfaces.

Additionally, the present disclosure provides a battery pack including the battery module according to the present disclosure.

Furthermore, the present disclosure provides a vehicle including the battery module according to the present disclosure.

### Advantageous Effects

According to an aspect of the present disclosure, it may be possible to prevent the ejection of high temperature gases or flames produced from any battery cell through the lead slot in the event of an abnormal situation in the battery cell, thereby preventing thermal damage to adjacent battery cells. In particular, by this aspect of the present disclosure, it may be possible to effectively prevent or delay thermal runaway propagation between cells.

Accordingly, in this case, it may be possible to ensure safety and reliability of the battery module including battery cells.

Additionally, according to an aspect of the present disclosure, it may be possible to prevent thermal damage to the other battery module due to high temperature gases or flames produced from the specific battery module. In particular, by this aspect of the present disclosure, it may be possible to effectively prevent or delay thermal runaway propagation between modules.

Accordingly, in this case, it may be possible to prevent or delay events such as fires or explosions caused by thermal runaway in the battery pack including battery modules or the device on which they are mounted.

In particular, in the case of electric vehicles, it may be possible to suppress or delay thermal runaway propagation between battery cells or battery modules, thereby increasing the time for evacuation of passengers or driving the vehicles.

Additionally, according to an aspect of the present disclosure, in the manufacture of the battery module, it may be possible to eliminate the need for a welding process between electrode leads, thereby reducing the cost and time and improving productivity.

Additionally, according to an aspect of the present disclosure, in the manufacture of the battery module, it may be possible to freely change the size or shape, thereby improving assembly performance and making the process easy.

Besides, the present disclosure may have many other effects, and the effects will be described in each embodiment, or with regard to effects that can be easily inferred by those skilled in the art, the corresponding description is omitted.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus the present disclosure should not be construed as being limited to the drawings.
FIG. 1 is a full perspective view of a battery module according to an embodiment of the present disclosure.
FIG. 2 is an exploded perspective view of the main components of a battery module according to an embodiment of the present disclosure.
FIG. 3 is a schematic perspective view of a busbar frame according to an embodiment of the present disclosure.
FIG. 4 shows the detailed structure of a busbar frame according to an embodiment of the present disclosure.
FIG. 5 is a cross-sectional view of a part of a battery module according to an embodiment of the present disclosure.
FIG. 6 is a cross-sectional view of a part of a battery module according to another embodiment of the present disclosure.
FIG. 7 is an enlarged view of section A in FIG. 6.
FIG. 8 is a front view of a busbar frame according to an embodiment of the present disclosure.
FIG. 9 is a schematic perspective view of a battery pack including a battery module according to an embodiment of the present disclosure.
FIG. 10 is a schematic perspective view of a vehicle including a battery pack according to an embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time the application was filed.

Additionally, the present disclosure may include many different embodiments. The description of substantially identical or similar elements in each embodiment is omitted to avoid redundancy, and differences will be described.

The terms indicating directions such as upper, lower, left, right, front and rear are used for convenience of description, but it is obvious to those skilled in the art that the terms may change depending on the position of the stated element or an observer.

For example, in an embodiment of the present disclosure, an X axis direction shown in the drawings may refer to a left-right direction, a Y axis direction may refer to a front-rear direction perpendicular to the X axis direction on the horizontal surface (X-Y plane), and a Z axis direction may refer to a top-bottom direction (a vertical direction) perpendicular to the X axis direction and the Y axis direction.

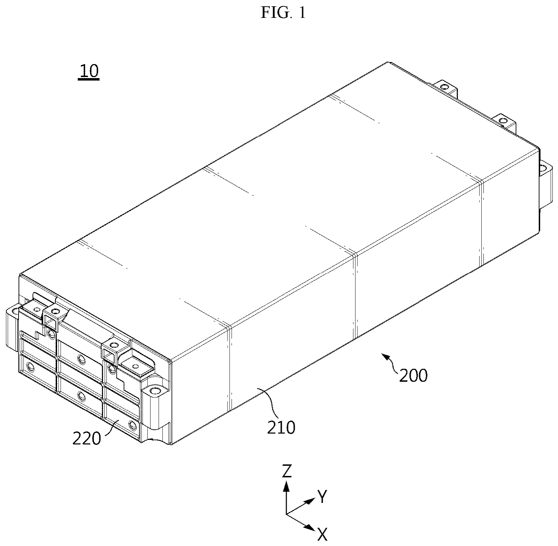

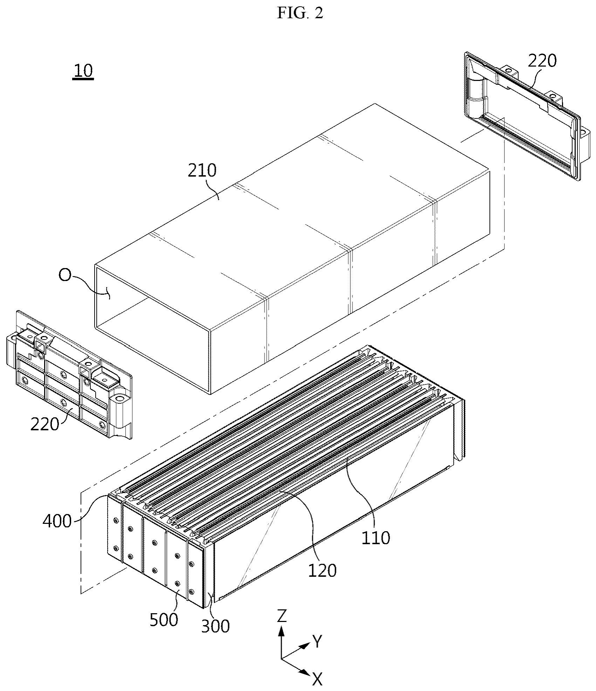

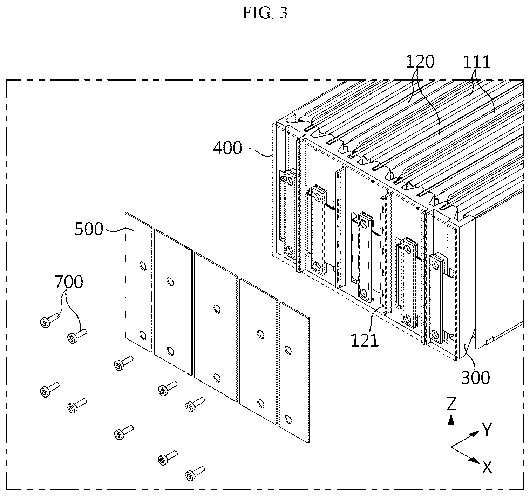

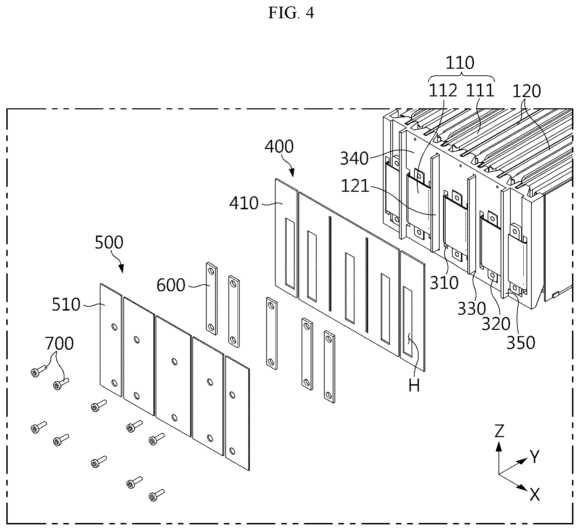

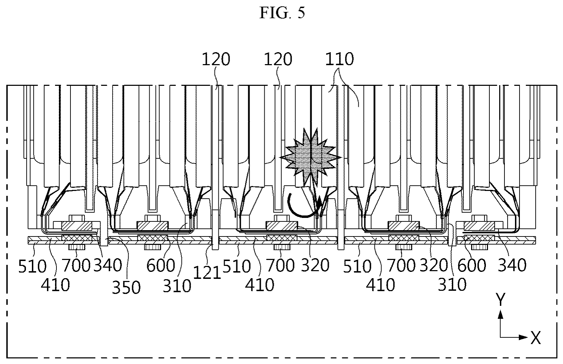

FIG. 1 is a full perspective view of a battery module according to an embodiment of the present disclosure, and FIG. 2 is an exploded perspective view of the main components of the battery module according to an embodiment of the present disclosure. Additionally, FIG. 3 is a schematic perspective view of a busbar frame according to an embodiment of the present disclosure, and FIG. 4 shows the detailed structure of the busbar frame according to an embodiment of the present disclosure. Additionally, FIG. 5 is a cross-sectional view of a part of the battery module according to an embodiment of the present disclosure.

Referring to FIGs. 1 to 5, the battery module 10 according to an embodiment of the present disclosure includes a battery cell 110, a busbar frame 300 and a frame cover 400.

Referring primarily to FIGs. 3 to 5, the battery cell 110 may include a plurality of battery cells. Additionally, each of the plurality of battery cells 110 may have an electrode lead 112. Specifically, the plurality of battery cells 110 may include an electrode assembly, a cell case 111 accommodating the electrode assembly and the electrode lead 112 connected to the electrode assembly, and extended in the outward direction of the cell case 111 to act as an electrode terminal.

The electrode lead 112 may include a pair of electrode leads, and the pair of electrode leads 112 may be extended from two ends of the battery cell 110, i.e., in the length direction (±Y direction). In this instance, the pair of electrode leads 112 may be a positive electrode lead or a negative electrode lead. If necessary, the battery cell 110 may have the two electrode leads 112 located at only one end in Y axis direction, for example, at the end in +Y axis direction.

The battery cell 110 may be a pouch-type secondary battery. The pouch-type secondary battery may include the cell case 111 in the shape of a pouch including a metal layer of aluminum interposed between polymer layers.

As shown in FIG. 2, etc., the plurality of pouch-type battery cells 110 may be arranged side by side along the left-right direction (X axis direction) in a standing position in the vertical direction (Z axis direction). In this instance, each battery cell 110 may have a sealing portion facing the front-rear direction (Y axis direction) and the top-bottom direction (Z axis direction) and an accommodation portion facing the left-right direction (X axis direction).

Meanwhile, the present disclosure is not limited to a particular type or shape of the battery cell 110, and a variety of battery cells 110 known at the time the application was filed may be used to form the cell assembly of the present disclosure. In this embodiment, as shown in the drawings, the battery cell 110 is the pouch-type battery cell that has high energy density and is easy to stack, but a cylindrical or prismatic secondary battery may be used as the battery cell 110.

Referring to FIG. 2, the busbar frame 300 may be formed in a plate shape to cover two sides of the battery cells 110, i.e., the front side (-Y direction) or the rear side (+Y direction) of the battery cells 110. The busbar frame 300 may be formed from an electrically insulating material, for example, plastics, by injection molding.

In this instance, the busbar frame 300 may include a lead slot 310. The lead slot 310 may allow at least part of the electrode leads 112 of the plurality of battery cells 110 to pass through. The lead slot 310 may allow the plurality of electrode leads 112 to pass through in +Y axis or -Y axis direction (front-rear direction). To this end, the lead slots 310 may be located at the side where the electrode leads 112 of the plurality of battery cells 110 are disposed, and be spaced apart from each other along the stack direction (X direction) of the battery cells 110. In this instance, the plurality of electrode leads 112 having passed through the lead slots 310 may be bent and stacked. By this stack structure, the plurality of battery cells 110 of which the electrode leads 112 contact each other may be electrically connected to each other. The stacked electrode leads 112 may be disposed between the busbar frame 300 and the frame cover 400 as described below and compressed against each other.

The battery module 10 according to an embodiment of the present disclosure may further include the frame cover 400. As indicated by the dotted line in FIG. 3, the frame cover 400 may be configured to cover at least part of the lead slot 310. Furthermore, the frame cover 400 may cover the entire outer surface of the lead slot 310, i.e., the front side. Alternatively, the frame cover 400 may cover a part of the surface of the lead slot 310.

In this instance, the frame cover 400 may be located on the outer side of the busbar frame 300. For example, as shown in FIGs. 3 and 4, the frame cover 400 may be located at the front side of the busbar frame 300 located at the front side. Additionally, the frame cover 400 may be located at the rear side of the busbar frame 300 located at the rear side.

Additionally, the frame cover 400 may be coupled in contact with the busbar frame 300. Accordingly, the frame cover 400 may cover the front surface and the rear surface of the battery cell 110 where the electrode leads 112 are located.

The frame cover 400 may be made of a material having low thermal conductivity and high heat resistance. For example, the frame cover 400 may be formed in the shape of a pad made of silicone or aerogel. Alternatively, the frame cover 400 may be made of mica having flame retardancy.

By the above-described exemplary configuration, when high temperature gases or flames are produced due to a thermal event in any one battery cell 110, it may be possible to prevent the gases or flames from moving in or out through the lead slot 310. Accordingly, it may be possible to prevent thermal damage to the adjacent battery cells 110, thereby suppressing thermal propagation between battery cells, and delaying thermal runaway in the battery module. Accordingly, by the above-described aspect of the present disclosure, it may be possible to ensure safety and reliability of the battery module 10.

Additionally, by the above-described exemplary configuration of the present disclosure, it may be possible to prevent the transfer of gases or flames emitted from the battery cell 110 to the other battery module through the lead slot 310, thereby preventing or delaying thermal runaway between the battery modules 10.

Meanwhile, referring to FIGs. 1 and 2, a module case 200 may have an internal space and be configured to accommodate the battery cells 110 in the internal space. The module case 200 of this embodiment may include a case body 210, and an end plate 220 disposed at the front side and the rear side of the case body 210.

The case body 210 may be formed in a rectangular pipe shape having a hollow structure having two open ends O in the length direction. For example, the case body 210 may be formed in the shape of a pipe having an upper surface, a lower surface, a left surface and a right surface, and an opening at each of a front end and a rear end.

Besides, the module case 200 may come in a variety of different shapes. For example, the case body 210 may include a left side plate, a right side plate and a lower plate integrally formed together. In this instance, the integrated case part may be referred to as a U-frame. The U-frame may be formed in a tubular shape by welding a top plate to the upper surface. Alternatively, the module case 200 may include a lower case in the shape of a box including a left side plate, a right side plate, a front plate and a rear plate integrally formed together and an upper cover that closes the top open end of the lower case.

Additionally, the case body 210 may allow the battery cells 110 to be inserted therein along a direction. For example, the battery cells 110 may be inserted into the case body 210 along the width direction (Y axis direction). That is, the battery cells 110 may be inserted into the case body 210 by sliding or interference fit. For the interference fit coupling, there may be almost no gap between the upper and lower surfaces of the case body 210 and the top and bottom of the battery cells 110, and there may be almost no gap between two sides of the case body 210 and two sides of the battery cells 110.

The case body 210 may be made of a metal having stiffness and heat resistance to physically or chemically protect the received battery cells 110.

Although not shown in the drawings, the case body 210 may have a venting hole to enable directional venting in a direction. For example, the case body may have a plurality of venting holes in the lower surface to enable directional venting in the downward direction of the battery module 10 through the venting holes.

The end plate 220 may be coupled to the open end O of the case body 210 to prevent the exposure of the connected part at which the electrode leads 112 of the battery cells 110 are secured to a second busbar 320 on the busbar frame 300. Although not shown in the drawings for convenience, the end plate 220 may be, for example, made of an insulating material on the inner side and a metal material on the outer side. Additionally, the end plate 220 may have a hole or a slit at a certain area for the exposure of the components that need to be exposed, for example, a positive terminal and a negative terminal of the battery module 10 or a connector.

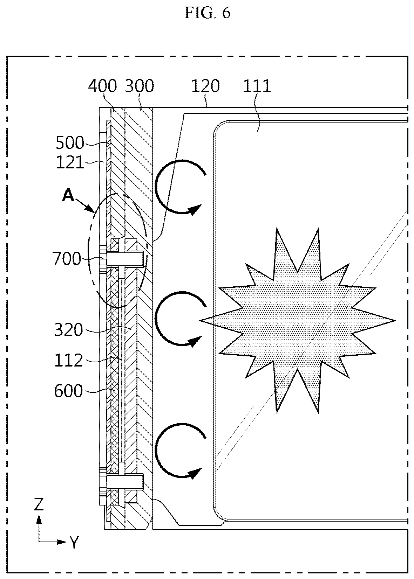

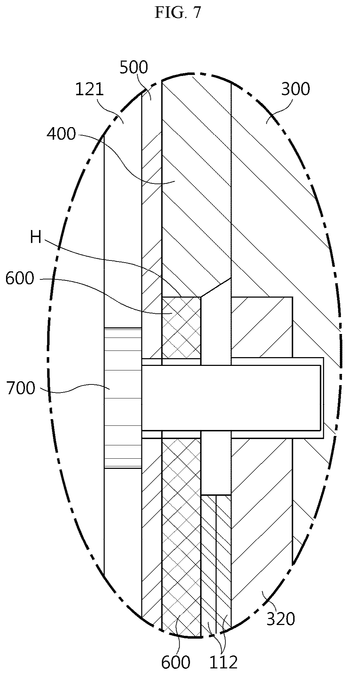

FIG. 6 is a cross-sectional view of a part of the battery module according to another embodiment of the present disclosure, and FIG. 7 is an enlarged view of section A in FIG. 6.

Meanwhile, in the exemplary configuration shown in FIGs. 5 to 7, a small gap may be formed between the busbar frame 300 and the frame cover 400 due to the stacked electrode leads 112. The battery module according to an embodiment of the present disclosure may further include a compression cover 500.

The compression cover 500 may be configured to compress the frame cover 400 against the busbar frame 300. Furthermore, the compression cover 500 may be disposed at the outer side of the frame cover 400 and configured to apply the pressure to and cover the outer surface of the frame cover 400. For example, the compression cover 500 may be disposed at the outer side of the frame cover 400, i.e., the front side, and may apply the pressure to the front side of the frame cover 400.

Additionally, the compression cover 500 may keep the frame cover 400 and the busbar frame 300 in the compressed state. For example, as shown in FIG. 4, the compression cover 500 may be secured to the busbar frame 300 by a fastening member 700. The compression cover 500 may be made of a material having structural stiffness and flame retardant characteristics. For example, the compression cover 500 may be made of an insulation-treated rigid material having high melting point, for example, SUS, or a rigid material having fire resistance and insulation performance.

By the above-described exemplary configuration, the compression cover 500 may reduce the gap between the busbar frame 300 and the frame cover 400 to bring the frame cover 400 and the busbar frame 300 into close contact with each other. Accordingly, it may be possible to prevent the ejection of flames through the lead slot 310. For example, referring to FIG. 6, when a thermal event occurs in the specific battery cell 110, flames may be released in the forward direction (-Y axis direction), and in this process, the lead slots 310 of the busbar frame 300 may be tightly sealed by the frame cover 400 compressedly secured to the busbar frame 300 by the compression cover 500. Accordingly, it may be possible to prevent flames from moving back and forth through the busbar frame 300, thereby preventing thermal propagation between cells or between modules caused by flame ejection.

Additionally, by the above-described exemplary configuration, because the frame cover 400 applies the pressure to the electrode lead 112 by the compression cover 500, the electrode leads 112 bent and stacked may be compressed against each other. Accordingly, in this case, the electrode leads 112 may be secured to each other without welding.

As described above, the frame cover 400 may come into close contact with the busbar frame 300 by the compression cover 500. Although FIGs. 5 to 7 show the exaggerated gap between the frame cover 400 and the busbar frame 300, the frame cover 400 and the busbar frame 300 may be actually in close contact with each other with little or no gap.

The frame cover 400 may include an elastic material. For example, the frame cover 400 may include or consist of silicone or aerogel. When the frame cover 400 is made of an elastic material, the frame cover 400 may be uniformly compressed when compressed by the compression cover 500 and come into closer contact with the busbar frame 300. Additionally, in this case, the gap between the busbar frame 300 and the frame cover 400 may be reduced or minimized, thereby preventing the ejection of gases or flames through the lead slots. In particular, the electrode lead may protrude from the outer surface of the busbar frame 300. In this instance, when the frame cover 400 includes an elastic material, despite the partially protruded outer surface, the compressed state may be uniformly maintained.

Referring primarily to FIGs. 4 to 6, the battery module according to the present disclosure may further include a first busbar 600.

The first busbar 600 may be electrically connected to the electrode lead 112. Additionally, through the electrical connection, the first busbar 600 may be configured to transmit state information of the battery cell 110 to an external component. For example, the first busbar 600 may be configured to transmit voltage information of the battery cell 110 to an external controller such as a Battery Management System (BMS).

The first busbar 600 may be made of an electrically conductive material to transmit an electrical signal. For example, the first busbar 600 may be made of copper or aluminum.

The first busbar 600 may be formed in a shape for sufficient contact area with the electrode lead 112. For example, the first busbar 600 may have a flat inner surface, and be extended in the top-bottom direction.

Additionally, the first busbar 600 may be disposed between the compression cover 500 and the busbar frame 300. In this instance, the first busbar 600 may be attached to the inner surface of the compression cover 500. Additionally, to maintain the attached state, the first busbar 600 may be secured by the fastening member 700. In this exemplary configuration, the first busbar 600 may be configured to apply the pressure to the busbar frame 300 or the bent electrode lead 112 by the compression cover 500. That is, when the compression cover 500 applies the pressure to the busbar frame 300 or the electrode lead 112 from the outside, the first busbar 600 located at the inner side of the compression cover 500 may come into contact with the electrode lead 112.

By the above-described exemplary configuration, the contact between the electrode lead 112 and the first busbar 600 may be made by the compression of the compression cover 500. In this instance, when the plurality of electrode leads 112 in contact with the first busbar 600 is stacked, the first busbar 600 may bring the plurality of electrode leads 112 into closer contact with each other. Accordingly, the electrical connection between the electrode leads 112 may be established more stably.

Additionally, by the above-described exemplary configuration, the bent electrode lead 112 and the first busbar 600 may be kept in contact with each other and electrically connected to each other without welding. Accordingly, in the manufacture of the battery module, it may be possible to reduce the cost and time and improve productivity.

Additionally, in the above-described exemplary configuration, the first busbar 600 may be located on the outer side of the bent electrode lead 112. In this case, obstruction by the frame cover 400 or the compression cover 500 may be minimized, making it easy to establish the connection of the first busbar 600 for transmitting sensing information to the outside. For example, the connection of the first busbar 600 to a module connector in the internal space of the module case may be made by a simple structure.

In another aspect of the present disclosure, the compression cover 500 may simultaneously cover the frame cover 400 and the first busbar 600. In this case, when flames are ejected directly to the front surface and the rear surface of the battery cell 110 via the busbar frame 300, the frame cover 400 of the flame retardant material may effectively support the busbar frame 300 to withstand the internal pressure. Additionally, in this case, it may be possible to prevent the ejection of flames toward the front surface and the rear surface of the battery cell 110.

Meanwhile, referring to FIG. 4, the frame cover 400 may include a lead exposure hole H. The lead exposure hole H may be a hole penetrated in at least one surface of the frame cover 400. For example, as shown in FIG. 4, the lead exposure hole H may be a hole penetrated in the front-rear direction from the front surface to the rear surface of the frame cover 400.

The lead exposure hole H may include a plurality of lead exposure holes. In this instance, the plurality of lead exposure holes H may be arranged spaced a predetermined distance apart from each other in the horizontal direction. For example, as shown in FIGs. 3 to 5, the plurality of lead exposure holes H may be arranged in the frame cover 400 along the left-right direction (X axis direction).

The lead exposure hole H may be configured to make a direct connection between the electrode lead 112 and the first busbar 600. In particular, the first busbar 600 may be attached to the inner side of the compression cover 500, the electrode lead 112 may be located at the outer side of the busbar frame 300, and the frame cover 400 may be interposed between the compression cover 500 and the busbar frame 300. In this instance, due to the lead exposure hole H of the frame cover 400, the first busbar 600 may come into direct contact with the electrode lead 112. That is, the lead exposure hole H may expose the electrode lead 112 to allow the first busbar 600 to connect to the electrode lead 112. Specifically, at least part of the first busbar 600 may be inserted into the lead exposure hole H. Accordingly, the first busbar 600 may be electrically connected to the electrode lead 112 through the lead exposure hole H more easily.

The lead exposure hole H may be configured to prevent the exposure of the lead slot 310 to the outside. That is, the lead exposure hole H may be configured to expose the outer side of the electrode lead 112, i.e., the front side, but prevent the exposure of the other component than the electrode lead 112, in particular, the lead slot 310. To this end, the lead exposure hole H may be disposed between the adjacent lead slots 310 among the plurality of lead slots 310.

For example, as shown in FIGs. 4 and 5, the lead exposure hole H may be disposed between the plurality of lead slots 310 spaced apart from each other in the left-right direction (X axis direction). In this case, the lead slot 310 may be covered by the frame cover 400 to prevent the ejection of flames to the outside, and the first busbar 600 may be connected to the electrode lead 112 through the lead exposure hole H.

The first busbar 600 may be configured to cover the lead exposure hole H. That is, the lead exposure hole H may be a hole penetrated in the front-rear direction to expose the components located at the inner side of the frame cover 400 to the outside. However, when the first busbar 600 is inserted into the lead exposure hole H, the lead exposure hole H may be completely closed. That is, when coupled, the first busbar 600 may prevent the exposure of the space located at the inner side of the frame cover 400 through the lead exposure hole H.

In this instance, at least part of the first busbar 600 may have a shape and size corresponding to the lead exposure hole H. According to an embodiment, the area and shape of the first busbar 600 may be identical or similar to the area and shape of the lead exposure hole H. For example, the first busbar 600 and the lead exposure hole H may have a rectangular shape having the same size and shape when viewed from the front side.

By this exemplary configuration, the first busbar 600 may be coupled to the lead exposure hole by an interference fit. Accordingly, because the first busbar 600 covers the lead exposure hole H, it may be possible to prevent or minimize the entry or exit of flames through the lead exposure hole H.

Referring to FIGs. 6 and 7, the first busbar 600 may protrude inwards through the lead exposure hole H. The first busbar 600 may be configured to apply the pressure to the electrode lead 112 when the first busbar 600 is inserted into the lead exposure hole H. That is, the first busbar 600 may be configured to come into contact with the electrode lead 112, and apply the pressure to the electrode lead 112 in the inward direction (in FIG. 7, +Y axis direction). In this instance, as shown in FIG. 7, to apply the pressure to the electrode lead 112, the thickness of the first busbar 600 may be similar to the thickness of the frame cover 400.

By this configuration, it may be possible to ensure or improve the fixing strength between the stacked electrode leads 112 or between the electrode lead 112 and the first busbar 600 without welding. Additionally, in this case, the gap between the busbar frame 300 and the frame cover 400 may be minimized. More ultimately, in the case of this exemplary configuration, the frame cover 400 may tightly cover the lead slot 310, thereby preventing the ejection of flames through the lead slot 310 more effectively.

Furthermore, at least part of the electrode lead 112 may be compressed between the busbar frame 300 and the first busbar 600 through the lead slot 310. As described above, each of the plurality of electrode leads 112 may be disposed in each of the plurality of battery cells 110, and at least part of the plurality of electrode leads 112 may be bent and stacked through the lead slots 310. The stacked electrode leads 112 may be compressed by the first busbar 600 by the pressing force applied inwards by the compression cover 500. In particular, the stacked electrode leads 112 and the first busbar 600 may be secured in contact with each other without welding.

Accordingly, in this case, in the manufacture of the battery module, it may be possible to reduce the cost and time, and improve productivity. Moreover, in the case of the above-described exemplary configuration, safety of the battery module while in use may be further improved.

Referring back to FIGs. 3 to 6, the compression cover 500 may be fastened to the busbar frame 300. In other words, the present disclosure according to an embodiment may further include the fastening member 700 to secure the compression cover 500 to the busbar frame 300.

The fastening member 700 may include a bolt. In this case, the component to which the bolt is fastened may have a fastening hole into which the bolt is inserted. For example, the compression cover 500, the first busbar 600 and/or the busbar frame 300 may have the fastening hole to which the bolt as the fastening member 700 may be inserted and fastened.

By this exemplary configuration of the present disclosure, there may be no need for welding to couple the compression cover 500 to the busbar frame 300. Accordingly, it may be possible to make the process easy, and reduce the cost and time.

Meanwhile, referring to FIGs. 4 to 6, the busbar frame 300 may include the second busbar 320.

The second busbar 320 may be located at the inner side of the electrode lead 112. For example, the bent electrode lead 112 may be located at the front side of the battery module 10 and the second busbar 320 may be located at the rear side of the battery module 10. The second busbar 320 may be disposed between the plurality of lead slots 310. The second busbar 320 may come into direct contact with the electrode lead 112 passing through the lead slot 310.

The second busbar 320 may be located at the inner side of the electrode lead 112, and the first busbar 600 may be located at the outer side of the electrode lead 112. That is, the electrode lead 112 may be interposed between the first busbar 600 and the second busbar 320. Additionally, the electrode lead 112 may be compressed by the first busbar 600 and the second busbar 320.

The compression cover 500 may be coupled to the first busbar 600 and the second busbar 320. For example, the compression cover 500, the first busbar 600 and the second busbar 320 may be fastened and secured by bolting. The compression cover 500 may compress the first busbar 600 against the second busbar 320. That is, the first busbar 600 and the second busbar 320 may be disposed between the busbar frame 300 and the compression cover 500 and be secured in close contact with each other.

By the above-described exemplary configuration, the first busbar 600 and the second busbar 320 may be kept in contact with each other by the electrode lead 112 and the compression cover 500. Accordingly, the coupled state between the first busbar 600 or the second busbar 320 and the electrode lead 112 may be stably maintained. In particular, because the second busbar 320 supports the electrode lead 112 at the inner side of the electrode lead 112, the close contact between the electrode lead 112 and the first busbar 600 may be maintained more stably. Additionally, in the case of the above-described exemplary configuration, there is no need for welding between many components, which makes the process of manufacturing the battery module 10 easier.

The second busbar 320 may be made of a metal material. Additionally, the second busbar 320 may include an electrically conductive material. For example, the second busbar 320 may be made of copper or aluminum. In this case, the second busbar 320 may be electrically connected to at least part of the electrode lead 112.

Accordingly, the electrode lead 112 may be disposed between the first busbar 600 and the second busbar 320 and individually electrically connected to the first busbar 600 and the second busbar 320. By the above-described exemplary configuration, it may be possible to increase the contact area between the electrode lead 112 and the first busbar 600 and the contact area between the electrode lead 112 and the second busbar 320, thereby ensuring stability in electrical connection or physical contact of the busbar and the electrode lead 112.

Meanwhile, referring to FIG. 2, the plurality of battery cells 110 may be stacked and arranged in a direction as described above. For example, referring primarily to FIG. 2, in this embodiment, the battery cells 110 may be arranged and stacked along the horizontal direction, for example, the left-right direction (X axis direction), each in the standing position in the vertical direction (Z axis direction).

In this exemplary configuration, the battery module according to the present disclosure may further include a barrier member 120.

The barrier member 120 may be disposed between the battery cells 110. In particular, a plurality of barrier members 120 may be included in one battery module 10. In this case, the plurality of barrier members 120 may be arranged spaced a predetermined distance apart from each other along a direction, i.e., the stack direction (X axis direction) of the battery cells 110. Additionally, the plurality of barrier members 120 may be arranged at a regular interval between at least one battery cell 110 (for example, for each of one or more battery cells 110). For example, when the battery cell 110 is a pouch-type battery cell as shown in FIG. 2, the barrier member 120 may contact two side surfaces of at least some of the plurality of pouch-type battery cells 110. In this embodiment, the plurality of barrier members 120 may be arranged every two or more battery cells 110.

The barrier member 120 may be formed from a material having good heat resistance and/or fire resistance performance, for example, silicone, aerogel, mica in the shape of a pad having compressive strength. Because the barrier member 120 is the pad having compressive strength, the barrier member 120 may compress the battery cell 110 in the event of swelling in the battery cell 110, thereby contributing to structural stiffness of the battery cells 110.

Additionally, in the event of a fire in the battery module 10, the barrier member 120 having heat resistance and/or fire resistance performance may perform a thermal barrier function to prevent heat of flames produced from the battery cell 110 in which the fire occurred from moving in the stack direction of the battery cells 110. Accordingly, it may be possible to minimize thermal propagation to the adjacent battery cells 110. The barrier member 120 may block not only heat but also high temperature gases, flames and ejected materials produced from the battery cell 110. Accordingly, because the barrier member 120 divides or separates the battery cells 110, it may be possible to prevent flame propagation between the battery cells 110.

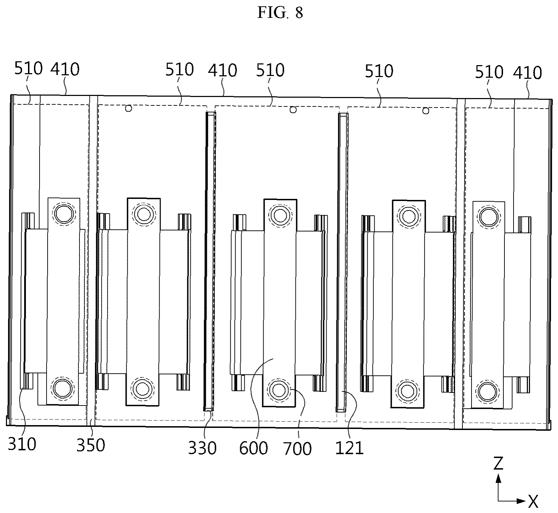

FIG. 8 is a front view of the busbar frame according to an embodiment of the present disclosure.

Referring to FIGs. 4 and 8, the busbar frame may have a through-hole 330 through which at least part of the plurality of the barrier members 120 pass.

The through-hole 330 may include a plurality of through-holes corresponding to the barrier members 120 at a predetermined location of the busbar frame 300. The through-hole 330 may be configured to allow the end of the barrier member 120 to be inserted. For example, the through-hole 330 may be formed in shape and size corresponding to the end of the barrier member 120.

Furthermore, referring to FIG. 2, the busbar frame 300 may be disposed at each of two ends of the barrier member 120. For example, the busbar frame 300 may be disposed at each of the front side and the rear side of the battery cell 110. In this case, the front end and the rear end of the barrier member 120 may be inserted into the through-hole 330 of the busbar frame 300 at the front side and the through-hole 330 of the busbar frame 300, respectively.

By the above-described exemplary configuration, the coupling strength between the barrier member 120 and the busbar frame 300 may be improved. In this case, the battery cells 110 may be stably received in the internal space between the barrier member 120 and the busbar frame 300. Additionally, by the above-described exemplary configuration, the internal space between the barrier member 120 and the busbar frame 300 may be divided more effectively, thereby improving heat or flame propagation barrier between the battery cells 110 by the barrier member 120.

The area and length of the through-hole 330 may correspond to those of a protruding portion 121. In this case, it may be possible to prevent the ejection of flames through the through-hole 330.

Furthermore, the barrier member 120 may include the protruding portion 121.

When the barrier member 120 is coupled to the busbar frame 300, the protruding portion 121 may be inserted into the through-hole 330 and protrude outwards. In particular, the protruding portion 121 may protrude in the outward direction from the busbar frame 300 through the through-hole 330, in particular, toward the frame cover 400. That is, the protruding portion 121 may be exposed from one surface of the busbar frame 300.

In this exemplary configuration, as shown in FIG. 8, etc., the protruding portion 121 may be configured to divide the outer space of the busbar frame 300 into a plurality of segments. For example, four protruding portions 121 may penetrate and protrude to the front side of the busbar frame 300 at the front side to divide the front space of the busbar frame 300 into five unit spaces.

Furthermore, the protruding portion 121 may divide the frame cover 400 and the compression cover 500 into a plurality of segments. The protruding portion 121 may protrude further outward than the frame cover 400 and the compression cover 500. That is, the protruding portion 121 may be extended outward from the frame cover 400 and the compression cover 500. In this instance, the protruding portion 121 may pass through the frame cover 400 and the compression cover 500 integrally formed, and as described below, the frame cover 400 and the compression cover 500 may include a plurality of plates and the protruding portion 121 may pass through them. By the protruding portion 121, the electrode lead 112, the first busbar 600 or the second busbar 320 may be also divided.

By the structure of the protruding portion 121, as shown in FIG. 5, the adjacent battery cells 110 may be effectively divided and separated. Accordingly, it may be possible to prevent the transfer of flames to the adjacent battery cells 110 over the protruding portion 121 more effectively.

Furthermore, in this case, it may be possible to suppress the propagation of heat or flames in the horizontal direction (for example, left-right direction) from the outer space of the busbar frame 300. Accordingly, in this aspect, it may be possible to suppress or delay thermal runaway propagation between the battery cells 110 in the battery module 10 more effectively. Additionally, in another aspect, the protruding portion 121 may physically separate and divide the bent electrode leads 112. Accordingly, it may be possible to prevent short circuits caused by the contact of the electrode lead 112 when impacts are applied to the battery module 10.

Referring to FIGs. 4, 5 and 8, the busbar frame 300 may include a partition wall 350 that protrudes from one surface to divide the electrode lead 112, the first busbar 600 or the second busbar 320. The partition wall 350 may protrude from the busbar frame 300 by a length corresponding to the protruding portion 121 and perform the same function as the protruding portion 121. Furthermore, the partition wall structure of the busbar frame 300 may play a role in supporting the terminal.

The busbar frame 300 may include a plurality of division surfaces 340 divided by the through-hole 330. In other words, the plurality of division surfaces 340 may be divided by the protruding portion 121. For example, referring to the exemplary configuration of FIG. 8, shown are five division surfaces 340 formed in the busbar frame 300 by two protruding portions 121 of the barrier member 120 and two partition walls 350 of the busbar frame 300. Here, for structural stability, the plurality of division surfaces 340 may be preferably integrally formed. In this instance, one or more electrode lead 112, one or more first busbar 600 and one or more second busbar 320 may be disposed for each division surface 340.

As shown in FIG. 8, according to an embodiment of the present disclosure, the frame cover 400 may include a plurality of cover plates 410 individually corresponding to the plurality of division surfaces 340. Additionally, according to another embodiment of the present disclosure, the protruding portion 121 may pass through the frame cover 400 and the compression cover 500 integrally formed.

In this instance, the frame cover 400 may include the number of cover plates 410 corresponding to the number of division surfaces 340 of the busbar frame 300. For example, referring to FIG. 5, when five division surfaces 340 are formed in the busbar frame 300, each of the five cover plates 410 may be disposed at each division surface 340 in a one-to-one relationship, and located in front of the corresponding division surface 340.

In this instance, the protruding portion 121 may pass through the plurality of cover plates 410 between them. In this case, it may be possible to avoid interference between the frame cover 400 and the barrier member 120.

Accordingly, when a thermal event occurs in the specific battery cell 110, the cover plate 410 corresponding to the corresponding battery cell 110 may perform a local flame barrier function. Additionally, in the case of the above-described exemplary configuration, the adverse influence of flames may not propagate to the other cover plate 410 separated from the corresponding cover plate 410. Additionally, because the frame cover 400 includes the plurality of plates separated from each other, the number or shape may be freely changed according to the shape or size of the front side of the busbar frame 300, the number of protruding portions 121 of the barrier member 120 or the shape of the protruding portion 121. Accordingly, assembly performance and productivity of the battery module 10 may improve.

Additionally, the compression cover 500 may include a plurality of compression plates 510 individually corresponding to the plurality of cover plates 410.

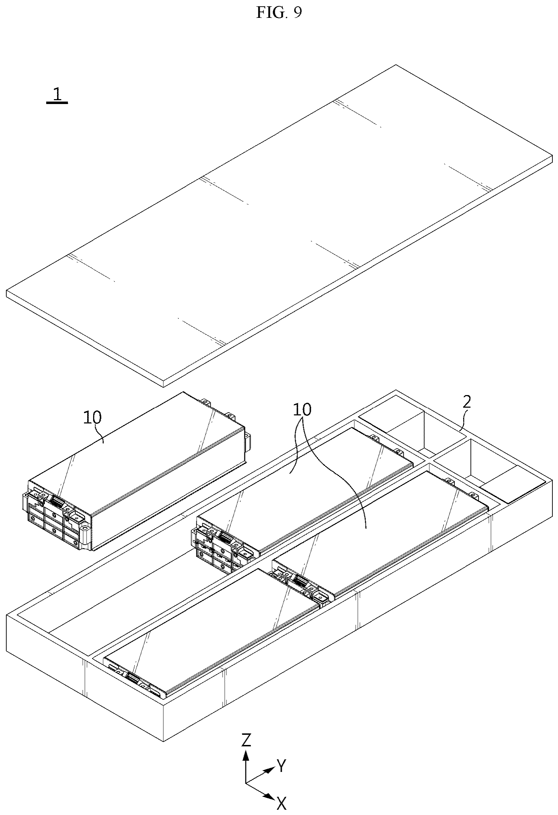

FIG. 9 is a schematic perspective view of a battery pack including the battery module according to an embodiment of the present disclosure.

Referring to FIG. 9, the battery pack 1 according to an embodiment of the present disclosure may include at least one battery module 10 according to an embodiment of the present disclosure as described above. The battery pack 1 according to the present disclosure may further include a pack case 2 accommodating a Battery Management System (BMS), a current sensor and a fuse for controlling the charge/discharge of at least one battery module and the above-described components.

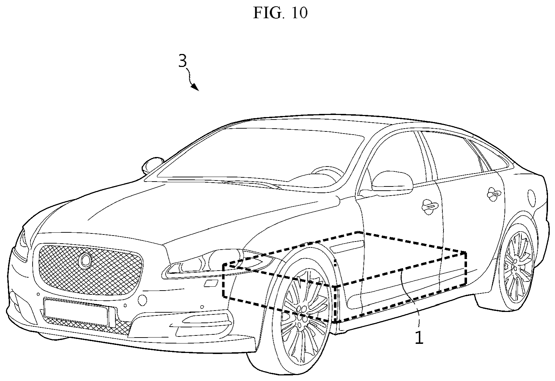

FIG. 10 is a schematic perspective view of a vehicle according to an embodiment of the present disclosure.

Referring to FIG. 10, the vehicle 3 according to an embodiment of the present disclosure may include at least one battery pack 1 according to an embodiment of the present disclosure or at least one battery module 10 according to an embodiment of the present disclosure. The vehicle 3 according to the present disclosure may include, for example, an electric vehicle, a hybrid electric vehicle or a plug-in hybrid electric vehicle. The vehicle 3 includes a four-wheeled vehicle and a two-wheeled vehicle. The vehicle 3 operates using power supplied from the battery pack 1 or the battery module 10 according to an embodiment of the present disclosure.

While the present disclosure has been hereinabove described by a limited number of embodiments and drawings, the present disclosure is not limited thereto, and it is obvious to persons having ordinary skill in the technical field pertaining to the present disclosure that a variety of modifications and change may be made within the technical aspect of the present disclosure and the appended claims and their equivalent scope.

## Claims

1. A battery module comprising:
a plurality of battery cells, each battery cell having an electrode lead;
a busbar frame having a lead slot located at a side where the electrode leads of the plurality of battery cells are disposed, the lead slot through which the electrode leads of the plurality of battery cells pass; and
a frame cover located at an outer side of the busbar frame and configured to cover at least part of the lead slot.

2. The battery module according to claim 1, further comprising:
a compression cover configured to compressedly secure the frame cover to the busbar frame.

3. The battery module according to claim 2, wherein the frame cover includes an elastic material and comes into close contact with the busbar frame.

4. The battery module according to claim 2, further comprising:
a first busbar disposed between the compression cover and the busbar frame and electrically connected to the electrode lead.

5. The battery module according to claim 4, wherein the frame cover includes a lead exposure hole penetrated in at least one surface, and
wherein the first busbar is inserted into the lead exposure hole and electrically connected the electrode lead through the lead exposure hole.

6. The battery module according to claim 5, wherein the first busbar is configured to cover the lead exposure hole.

7. The battery module according to claim 5, wherein the first busbar is configured to apply pressure to the electrode lead through the lead exposure hole.

8. The battery module according to claim 7, wherein at least part of the electrode lead is compressed between the busbar frame and the first busbar through the lead slot.

9. The battery module according to claim 5, wherein the lead exposure hole is configured to prevent the lead slot from being exposed to outside.

10. The battery module according to claim 2, wherein the compression cover is bolt-fastened to the busbar frame.

11. The battery module according to claim 4, wherein the busbar frame includes a second busbar at an inner side of the electrode lead, and
wherein the compression cover is coupled to the first busbar and the second busbar.

12. The battery module according to claim 2, wherein the plurality of battery cells is stacked and arranged in a direction, and
wherein the battery module further comprises a plurality of barrier members between the at least one battery cell along the direction.

13. The battery module according to claim 12, wherein the busbar frame has a through-hole through which at least part of the plurality of barrier members passes.

14. The battery module according to claim 13, wherein the barrier member includes a protruding portion that is inserted into the through-hole and protrudes from the busbar frame toward the frame cover, and
wherein the protruding portion is configured to divide an outer space of the busbar frame into a plurality of segments.

15. The battery module according to claim 13, wherein the busbar frame includes a plurality of division surfaces divided by the through-hole, and
wherein the frame cover includes a plurality of cover plates individually corresponding to the plurality of division surfaces.

16. A battery pack comprising the battery module according to any one of claims 1 to 15.

17. A vehicle comprising the battery module according to any one of claims 1 to 15.
